# EUROPÄISCHE PATENTSCHRIFT

(11) **EP 2 213 887 B1**
(45) Veröffentlichungstag und Bekanntmachung des Hinweises auf die Patenterteilung: **28.11.2012**
(21) Anmeldenummer: 10000982.8
(22) Anmeldetag: 01.02.2010
(51) Int. Cl.: F16B 5/06, F16B 12/20

(54) **Verbindungsvorrichtung**
Connecting device
Dispositif de liaison

(30) Priorität: 03.02.2009 DE 102009007328
(43) Veröffentlichungstag der Anmeldung: 04.08.2010
(73) Patentinhaber: DURAVIT AG, 78132 Hornberg (DE)
(72) Erfinder: Hauer, Hubert, 72379 Hechingen (DE); Kern, Laurence, 78647 Trossingen (DE); Brenner, Achim, 78739 Hardt (DE); Merkt, Konrad, 78588 Denkingen (DE); Zepf, Georg, 78589 Dürbheim (DE)
(74) Vertreter: Blaumeier, Jörg

(56) Entgegenhaltungen:
- DE-A1- 3 224 711
- DE-A1- 10 110 799
- US-A- 4 292 003

## Beschreibung

Die Erfindung betrifft eine Verbindungsvorrichtung zum Verbinden zweier unter einem Winkel < 180° zueinander stehender plattenförmiger Elemente.

Zwei plattenförmige Elemente sind in vielen Bereichen miteinander zu verbinden, hervorzuheben ist hierbei der Möbelbereich. Primär kommen dort Zapfenverbindungen oder Lamellenverbindungen zum Einsatz oder es werden Verbindungswinkel, die an den plattenförmigen Elementen festgeschraubt werden, verwendet. Als solche Elemente sind beispielsweise Wände von Schränken oder Kommoden oder dergleichen oder Verkleidungen von Einbaumöbeln oder dergleichen zu nennen. Solche Verbindungsvorrichtungen sind aus DE 101 10 799 A oder US 4 292 003 A bekannt. Zwar lassen alle diese bekannten Verbindungsvorrichtungen eine feste Verbindung der Elemente zu, sie sind jedoch primär auf eine dauerhafte Verbindung ausgelegt, weshalb sich insbesondere dann Schwierigkeiten ergeben, wenn die Verbindung aus welchen Grünen auch immer zu öffnen ist, beispielsweise um infolge eines Umzugs ein Möbel zu zerlegen oder um beispielsweise eine Verkleidung beispielsweise eines Sanitärgegenstands wie einer Wanne oder dergleichen zu Zwecken der Zugänglichkeit des dahinterliegenden Bereichs zu entfernen.

Der Erfindung liegt damit das Problem zugrunde, eine Verbindungsvorrichtung anzugeben, die bei einfacher Ausgestaltung ein beliebig häufiges und einfaches erneutes Öffnen und damit Lösen der Verbindung beider Elemente zu lässt.

Zur Lösung dieses Problems ist eine Verbindungsvorrichtung der eingangs genannten Art vorgesehen, umfassend ein erstes Gehäuseteil, das am ersten Element festzulegen ist, ein zweites Gehäuseteil, das am zweiten Element festzulegen ist, wobei beide Gehäuseteile in der Montagestellung mit ihren benachbarten Rändern einander überlappend zu einem Gehäuse zusammengesetzt sind, sowie ein zwischen den Gehäuseteilen drehbar aufgenommenes Drehelement, das zur Verbindung beider Gehäuseteile in eine Klemmstellung drehbar ist, in der es an den Gehäuseteilen derart angreift, dass diese im Bereich ihrer überlappenden Ränder miteinander verklemmt sind.

Die erfindungsgemäße Verbindungsvorrichtung verbindet die Elemente über einen Klemmmechanismus, der beliebig oft geschlossen und gelöst werden kann. Hierzu ist ein zweiteiliges Gehäuse vorgesehen, wobei jeweils ein Gehäuseteil an einem der zu verbindenden Elemente befestigt ist. Zur Montage werden die Elemente aneinander gesetzt, so dass die beiden Gehäuseteile zusammengefügt werden und sich zu einem Gehäuse ergänzen. Die beiden Gehäuseteile sind randseitig so ausgestaltet, dass ihre freien Ränder, mit denen sie ineinandergeschoben werden, in der Montagestellung einander hinreichend weit überlappen. Zur Verklemmung dient ein im Gehäuseinneren aufgenommenes Drehelement, das zwischen einer Lösestellung und einer Klemmstellung um eine Drehachse verschwenkt werden kann. Während es sich zum Zusammenfügen der Gehäuseteile in der Lösestellung befindet, wird es zum Verklemmen verdreht, beispielsweise um einen vorgegebenen Winkel von ca. 90°. Hierbei wirkt es mit beiden Gehäuseteilen zusammen, greift also mit seiner Außenseite an beiden Gehäuseteilen an. Dies geschieht derart, dass die Gehäuseteile quasi auseinandergedrückt werden, was dazu führt, dass ihre überlappenden Ränder gegeneinander gedrückt, mithin also verklemmt werden. Es kommt also im Randbereich zu einer Flächenpressung, die zu einer hinreichend festen Plattenverbindung führt. So einfach wie das Verbinden ist, ist auch das Lösen. Hierzu ist lediglich das Drehelement, das über einen entsprechenden Abschnitt mit einem Werkzeug oder sonstigem Betätigungselement betätigt werden kann, aus der Klemmstellung zurück in die Lösestellung zu drehen, wodurch die Randklemmung aufgehoben wird und die Gehäuseteile wieder auseinandergezogen werden können.

Das heißt, dass die erfindungsgemäße Verbindungsvorrichtung beliebig oft geschlossen und gelöst werden kann, ohne dass ihre Funktionalität darunter leidet. Dies lässt den Einsatz der Verbindungsvorrichtung vor allem in Bereichen zu, wo des Öfteren die Elemente voneinander gelöst werden müssen, beispielsweise bei einer Verkleidung eines Sanitärgegenstands wie einer Badewanne, wo mitunter zu Reinigungs- oder Prüfzwecke der Bereich hinter den Elementen untersucht werden muss. Die beiden Gehäuseteile ergänzen sich in der Montagestellung zweckmäßigerweise zu einem rechteckigen Gehäuse, sind also entsprechend gewinkelt ausgeführt.

Nachdem wie beschrieben die beiden Gehäuseteile beim Verdrehen des Drehelements in die Klemmstellung auseinandergedrückt werden, muss der Rand-übergriff der Gestalt sein, dass im Bereich der einen Randüberlappung der Rand des ersten Gehäuseteils gegen den des zweiten gedrückt wird, und im Bereich der anderen Überlappung der Rand des zweiten Gehäuseteils gegen den des ersten gedrückt wird. Um dies zu ermöglichen weisen die Gehäuseteile eine erste und eine zweite Seitenwand, die zueinander parallel verlaufen, auf, wobei in der Montagestellung die erste Seitenwand des Gehäuseteils die benachbarte Seitenwand des zweiten Gehäuseteils außenseitig übergreift, währen die zweite Seitenwand des ersten Gehäuseteils die benachbarte Seitenwand des zweiten Gehäuseteils innenseitig übergreift. Es ist also ein wechselseitiger oder umgekehrter Übergriff an den jeweiligen Randbereichen realisiert, so dass sichergestellt ist, dass beim Auseinanderdrücken der Gehäuseteile beide zwingend gegeneinander verspannt werden. Die beiden Seitenwände sind, wenn das Gehäuse in seiner Grundform rechteckig ist, über eine hierzu rechtwinklig verlaufende weitere Wand verbunden, so dass sich ein zumindest an allen vier Seiten geschlossenes Gehäuse ergibt. Das Gehäuse ist bevorzugt an beiden Stirnseiten offen, um einen Angriff an dem Drehelement zu ermöglichen.

Für ein leichtes Zusammenschieben der Gehäuseteile ist es zweckmäßig, wenn die Kanten der einander benachbarten Ränder, die also in der Montagestellung einander überlappend hintergreifen, zumindest einseitig angeschrägt sind, das heißt, dass sich Führungsschrägen ergeben.

Wie beschrieben wird die Flächenpressung durch Verdrehen des mit beiden Gehäuseteilen zusammenwirkenden Drehelements hervorgerufen. Um ein sicheres und eine hinreichende Klemmkraft erwirkendes Verdrehen zu ermöglichen ist es zweckmäßig, wenn an jedem Gehäuseteil ein Teil einer Drehaufnahme für das Drehelement angeordnet ist, welche Teile sich in der Montagestellung zu einer geschlossenen Drehaufnahme ergänzen. Diese Teile, die - nachdem das Drehelement zweckmäßigerweise ein Zylinderabschnitt ist - quasi als gerundete Hülsenabschnitte ausgeführt sind, umschließen also das zylindrische Drehelement vollständig nach Art einer Hülse, so dass das Drehelement großflächig an beiden Gehäuseteilen beziehungsweise den Lager- und Führungsflächen der Drehaufnahmehälften beider Gehäuseteile anliegt und eine hinreichend gute Drehführung bei gleichzeitiger Erzeugung hinreichend hoher Klemmkräfte möglich ist.

Das Drehelement ist wie ausgeführt zweckmäßigerweise als Zylinderabschnitt ausgeführt, ist also von seiner Grundform her zylindrisch, jedoch an einer Seite "abgeschnitten". Das heißt, dass das Drehelement unterschiedliche Durchmesser aufweist. Hierüber ist ein leichtes Einführen zwischen den Drehaufnahmehälften sichergestellt, wozu lediglich die plane Fläche des Zylinderabschnitts entsprechend positioniert sein muss, wobei diese Stellung letztlich der Lösestellung entspricht.

Um zu vermeiden, dass das Drehelement aus der Drehaufnahme wandert oder herausgezogen werden kann, ist in Weiterbildung der Erfindung am Zylinderabschnitt an einer oder an beiden Enden ein radial überstehender Anschlagring vorgesehen, der die Drehaufnahmehälften respektive die geschlossene Drehaufnahme ober- und/oder unterseitig übergreift und ein Herausziehen verhindert.

Eine zweckmäßige Weiterbildung der Erfindung sieht ferner vor, im Bereich der Zylinderaußenfläche des Drehelements eine Nut vorzusehen, in die in der Montagestellung ein an einem Teil einer Drehaufnahme vorgesehener Vorsprung eingreift. Diese Nut, die in der Drehebene verläuft, dient in Verbindung mit dem eingreifenden Vorsprung als Drehbegrenzung. Die Nut läuft beispielsweise um einen Winkel von ca. 90° um. Die Lösestellung und die Klemmstellung sind dadurch definiert, dass der Vorsprung an der jeweiligen stirnseitigen Nutkante anschlägt und ein Weiterdrehen verhindert. Hierüber wird für den Anwender auf einfache Weise angezeigt, ob er die jeweilige Löse- oder Klemmstellung als Endstellung erreicht hat.

Zum einfachen Bewegen des Drehelements ist zweckmäßigerweise ein Werkzeugangriffabschnitt vorgesehen. Dieser kann beliebig ausgestaltet sein, beispielsweise als stirnseitige Einsenkung am Drehelement, in welche Einsenkung ein Schraubendreher oder dergleichen eingreifen kann. Denkbar ist auch ein entsprechender Werkzeugangriffabschnitt, der ein Ansetzen eines Schraubenschlüssels oder dergleichen ermöglicht. Dabei kann der Werkzeugangriffabschnitt am Drehelement selbst vorgesehen sein, mit diesem also einstückig sein, denkbar ist es aber auch, ihn an einer mit dem Drehelement verbundenen Stange vorzusehen. Diese Stange kann beispielsweise als Sechskantstange ausgeführt sein, die von Haus aus einen Angriff eines Schraubenschlüssels zulässt.

Werden die beiden Gehäuseteile unmittelbar mit den jeweiligen plattenförmigen Elementen verbunden, und bilden sie ein rechteckiges Gehäuse, so können die plattenförmigen Elemente unter einem Winkel von 90° zueinander verbunden werden. Um jedoch ausgehend von einem solchen standardisierten Gehäuse respektive standardisierten Gehäuseabschnitten auch die Möglichkeit zu geben, die Platten unter einem größeren Winkel als 90° verbinden zu können, ist es erforderlich, ein oder beide Gehäuseteile unter einem angestellten Winkel am jeweiligen Element zu befestigen. Hierzu ist zweckmäßigerweise wenigstens ein eine Keilform aufweisendes Unterlegteil vorgesehen, das zwischen ein plattenförmiges Element und die Gehäusehälfte zu setzen ist. Der jeweilige Verbindungswinkel ist abhängig vom Keilwinkel des verwendeten Unterlegteils respektive von der Winkelsumme beider Keilwinkel, wenn zwei Unterlegteile verwendet werden. Wie auch bei der Ausgestaltung des Gehäuses respektive der Gehäuseteile und des Drehelements ist es auch hier möglich, die Unterlegteile mit quasi standardisierten Maßen bereitzustellen, so dass letztlich definierte Verbindungswinkel (z. B. 105°, 120°, 135°, 150° etc) einstellen lassen.

Je nach Größe respektive Länge der beiden zu verbindenden Elemente ist eine Fixierung an zwei oder mehr Stellen bezogen auf die Länge der aneinanderliegenden Elementkanten erforderlich. Hierbei besteht die Möglichkeit, quasi separate Verbindungsvorrichtungen respektive separate Gehäuse mit separaten Drehelementen einzusetzen, die einzeln betätigt werden müssen. Denkbar ist es aber erfindungsgemäß auch, eine quasi kombinierte Verbindungsvorrichtung einzusetzen, die wenigstens zwei mittels zweier Gehäusehälften gebildete Gehäuse samt Drehelementen umfasst, wobei die Drehelemente über ein Bewegungselement, insbesondere eine Stange, zur simultanen Bewegung verbunden sind. Das heißt, dass die jeweiligen Gehäusehälften der beiden einzelnen Gehäuse im Bereich des oberen und unteren Plattenendes vorgesehen werden, wobei die beiden Drehelemente über eine lange Stange miteinander verbunden sind und simultan bei Betätigung der Stange bewegt und in die Klemm- oder Lösestellung gebracht werden, Dies ermöglicht es, durch eine einzige Betätigung sämtliche Verbindungen zu schließen und die beiden Platten fest miteinander zu verbinden. An dieser Stelle ist darauf hinzuweisen, dass selbstverständlich auch mehr als zwei Gehäuse respektive deren Drehelemente über eine einzige Stange miteinander gekoppelt werden können. Sollen beispielsweise zwei Schrankwände mit einer Höhe von z. B. 180 cm oder mehr miteinander verbunden werden, so ist es selbstverständlich möglich, über die gesamte Länge drei oder mehr Gehäuse zu positionieren und deren über die Stange verbundenen Drehelemente simultan zu betätigen.

Die Gehäusehälften und/oder das Drehelement selbst sind entweder aus Kunststoff, insbesondere Polyphenylensulfid (PPS), oder Metall, insbesondere Aluminium oder Edelstahl, ausgeführt. Selbstverständlich ist es auch denkbar, beispielsweise die Gehäusehälften aus Kunststoff und das Drehelement aus Metall auszuführen oder umgekehrt.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Perspektivansicht eines ersten Gehäuseteils,
- Fig. 2: eine gedrehte Perspektivansicht des ersten Gehäuseteils,
- Fig. 3: eine Schnittansicht durch das erste Gehäuseteil in Richtung der Linie III - III in Fig. 2,
- Fig. 4: eine Perspektivansicht des zweiten Gehäuseteils,
- Fig. 5: eine gedrehte Perspektivansicht des zweiten Gehäuseteils,
- Fig. 6: eine Schnittansicht durch das zweite Gehäuseteil in Richtung der Linie VI - VI in Fig. 4,
- Fig. 7: eine Perspektivansicht des Drehelements,
- Fig. 8: eine Schnittansicht durch das Drehelement in Richtung der Linie VIII - VIII in Fig. 7,
- Fig. 9: die beiden Gehäuseteile, montiert an jeweils einem plattenförmigen Element, unmittelbar vor dem Zusammenfügen, mit geschnitten dargestelltem Drehelement,
- Fig. 10: eine Ansicht entsprechend Fig. 9 mit zusammengefügtem Gehäuseteil,
- Fig. 11: die Ansicht entsprechend Fig. 10 mit ausgehend von der in Fig. 11 gezeigten Lösestellung des Drehelements in die Klemmstellung gedrehtem Drehelement,
- Fig. 12: eine Schnittansicht in Längsrichtung durch die zusammengesetzten Gehäuseteile, und
- Fig. 13: eine Prinzipdarstellung einer Verbindungsvorrichtung umfassend zwei Gehäuse mit über eine gemeinsame Stange gekoppelten Drehelementen.

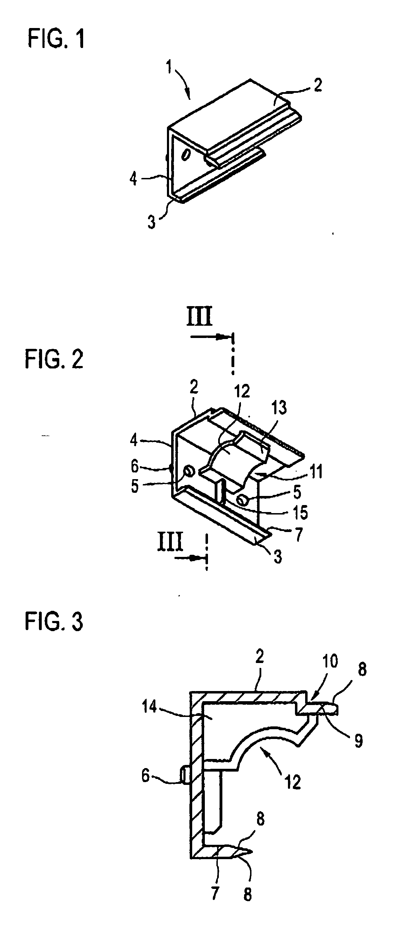

Die Figuren 1 - 3 zeigen das erste Gehäuseteil 1, bestehend aus einer ersten Seitenwand 2, einer gegenüber dieser deutlich kürzeren zweiten, jedoch parallelen Seitenwand 3 sowie einer beide verbindenden Wand 4. Die Wände stehen jeweils unter einem Winkel von 90° zueinander. An der Wand 4 sind Durchbrechungen 5 sowie ein oder mehrere rückseitige Zapfen 6 vorgesehen, die der Montage des Gehäuseteils 1 an einem plattenförmigen Element dienen. Der Rand 7 der zweiten Seitenwand ist im gezeigten Beispiel kantenseitig beidseits mit Schrägflächen 8 versehen, während der Rand 9 der ersten Seitenwand 2 im gezeigten Beispiel kantenseitig nur mit einer Schrägfläche 8 versehen ist. Die Seitenwand 2 weist einen Absatz oder eine Stufe 10 auf, an den sich ein Wandabschnitt anschließt, der den Rand der Seitenwand 9 bildet respektive aufweist.

Im "Inneren" dieser im Wesentlichen U-förmigen Geometrie befindet sich das erste Teil 11 einer Drehaufnahme für ein Drehelement, das nachfolgend noch beschrieben ist. Nachdem, worauf nachfolgend noch eingegangen wird, das Drehelement eine zylindrische Grundform aufweist beziehungsweise als Zylinderabschnitt ausgeführt ist, weist dieses Teil 11 der Drehaufnahme eine entsprechend der Zylinderform des Drehelements gewölbte Lager- oder Führungsfläche 12 auf, die über entsprechende Haltestege 13 an den jeweiligen Wänden 2, 4 angebunden ist. Zur Stabilisierung ist ferner eine Stützwand 14 sowie ein Stützsteg 15 vorgesehen.

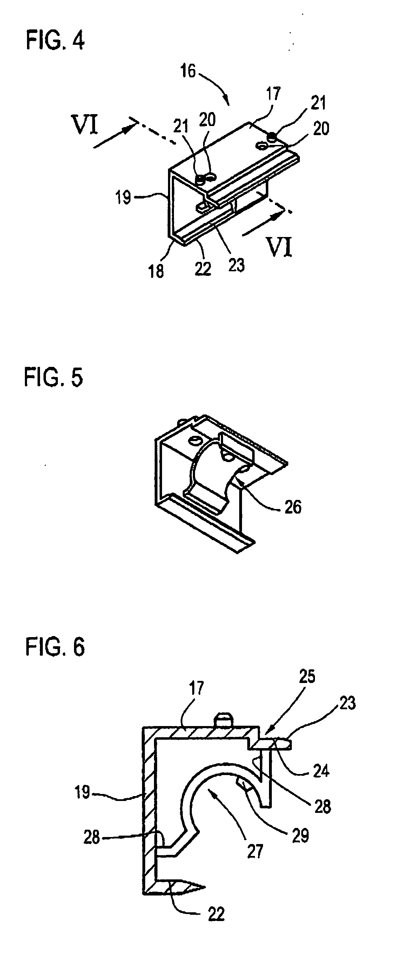

In den Figuren 4 - 6 ist das zweite Gehäuseteil 16 gezeigt. Auch dieses weist eine erste Seitenwand 17 sowie eine gegenüber dieser deutlich kürzeren zweiten Seitenwand 18 und eine diese verbindende weitere Wand 19 auf. Bei dieser Ausgestaltung sind an der ersten Seitenwand 17 Durchbrechungen 20 sowie zwei Zapfen 21 vorgesehen, über die die Montage an dem zweiten plattenförmigen Element erfolgt. Die Durchbrechungen 20 werden, wie auch die Durchbrechungen 5, über entsprechende Schrauben oder dergleichen zu Montagezwecken durchsetzt.

Auch hier weist die zweite Seitenwand 18 einen Rand 22 mit einer kantenseitigen Schrägfläche 23 auf, entsprechend weist der Rand 24 der ersten Seitenwand kantenseitig eine Schrägfläche 23 auf. Der Rand 24 ist auch hier über eine Stufe 25 versetzt an der ersten Seitenwand 17 angeordnet.

Auch hier ist im "Inneren" der U-förmigen Geometrie das zweite Teil 26 der Drehaufnahme für das Drehelement vorgesehen, die gegebenenfalls eine Lage- oder Führungsfläche 27 aufweist, die der zylindrischen Form des Drehelements entsprechend rund ausgeführt ist. Auch diese Lager- oder Führungsfläche 27 ist über entsprechende Stege 28 an den Wänden 17 und 19 fixiert. Des Weiteren ist an der Lage- oder Führungsfläche 27 ein Vorsprung 29 vorgesehen, der in eine noch zu beschreibende Nut an der Zylinderfläche des Drehelements als Drehwegsbegrenzung eingreift.

Ersichtlich erstrecken sich die beiden Teile der Drehaufnahme bzw. deren jeweilige gebogene Lager- oder Führungsflächen 12 und 27, die sich zu einer zylindrischen Hülse, die die Drehaufnahme bildet, ergänzend (worauf auch nachfolgend noch eingegangen wird) nicht um jeweils im Wesentlichen um 180°. Vielmehr beschreibt die Lager- oder Führungsfläche 12 ein deutlich kleineres Winkelsegment beschreibt als die Lager- oder Führungsfläche 27. Andere Geometrien sind jedoch denkbar.

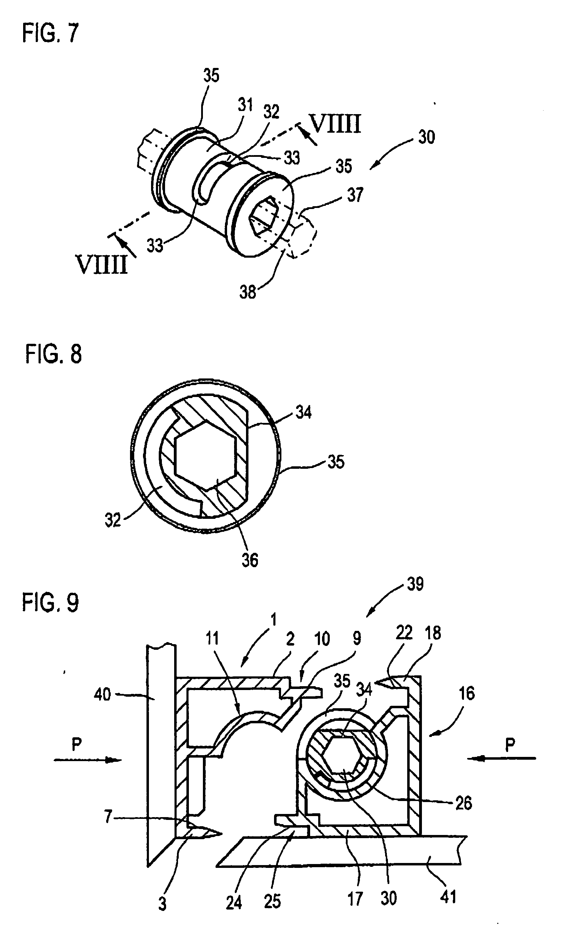

Die Fig. 7 und 8 zeigen das Drehelement 30, das eine im Wesentlichen zylindrische Grundform aufweist, mit einer Zylinderaußenfläche 31 mit einer darin vorgesehenen, der Drehwegsbegrenzung dienenden Nut 32 mit zwei stirnseitigen Nutkanten 33. In der Montagestellung greift der Vorsprung 29 in die Nut ein und begrenzt durch Anschlagen an der jeweiligen Stirnfläche 33 die Drehbewegung in die eine oder andere Richtung.

Das Drehelement 30 ist als Zylinderabschnitt ausgeführt, d. h., dass es keinen Vollzylinder beschreibt, sondern nur einen Teilzylinder. Wie aus Fig. 8 ersichtlich ist, ist die Zylinderform an einer Seite "abgeschnitten", es ergibt sich also eine plane Fläche 34. Diese Fläche erstreckt sich über die gesamte Länge des Drehelements 30, abgesehen von den beiden radial an den Elementenden vorspringenden Rändern 35, die ein Herausrutschen aus der Drehaufnahme verhindern. In der Schnittansicht gemäß Fig. 8, die in Höhe der in der Drehebene verlaufenden Nut 32 verläuft, ist neben der Nut 32 auch die Fläche 34 wie auch der eine Rand 35 gezeigt. Die Nut 32 läuft im gezeigten Beispiel um einen Winkel von ca. 140° um, wobei dies lediglich exemplarisch ist. Sie liegt im Wesentlichen der Ebene 34 gegenüber. Die Nutlänge begrenzt den maximalen Drehwinkel.

Weiterhin weist das Drehelement 30 eine mittige Durchbrechung 36 mit einer 6-Kant-Querschnittsform auf. Durch diese erstreckt sich eine in Fig. 7 nur gestrichelt angedeutete 6-Kant-Stange 37, die der Drehung des Drehelements 30 dient und die in Folge ihrer 6-Kant-Form einen Werkzeugangriffsabschnitt 38 bildet. Zum Verdrehen kann an der Stange ohne Weiteres mit einem Schraubenschlüssel oder dergleichen angegriffen werden, um das Drehelement 30 in der Drehaufnahme zu verdrehen.

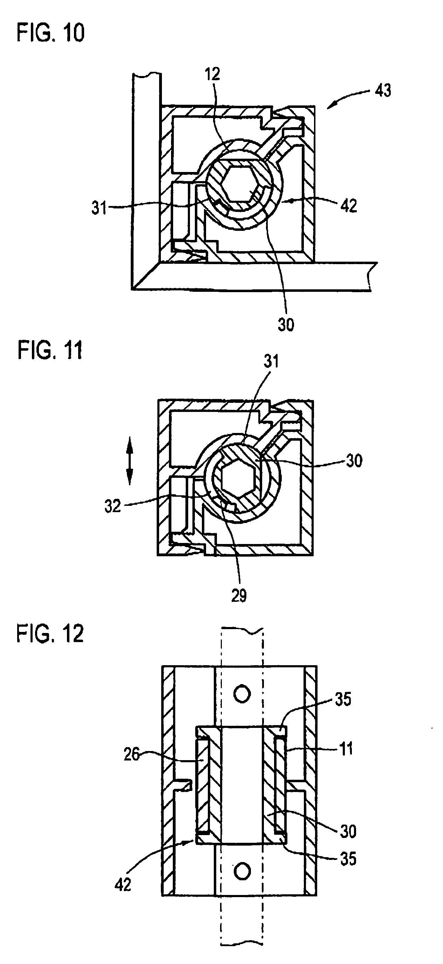

Fig. 9 zeigt die erfindungsgemäße Verbindungsvorrichtung 39 kurz vor Erreichen der Montagestellung, wenn die beiden Gehäuseteile 1 und 16 zusammengefügt werden. Fig. 10 zeigt die Montagestellung, wobei sich das Drehelement 30 noch in der Lösestellung befindet. Das Drehelement 30 ist der Übersichtlichkeit halber hier geschnitten dargestellt.

Wie Fig. 9 zeigt, ist das erste Gehäuseteil 1 an einem ersten plattenförmigen Element 40 und das zweite Gehäuseteil an einem zweiten plattenförmigen Element 41 befestigt. Das Drehelement 30, das bereits mit der Stange 37 versehen werden kann, die aber auch erst nachträglich eingesetzt werden kann, ist bereits in leichter Klemmhalterung in dem Teil 26 am zweiten Gehäuseteil 16 aufgenommen. Die leichte Klemmhalterung wird dadurch erzielt, dass der Durchmesser des zylindrischen Abschnitts des Drehelements 30 dem Innendurchmesser dem um mehr als 180° umlaufenden Teil 26 der Drehaufnahme entsprechend angepasst ist. Die ebene Fläche 34 befindet sich in einer Position, in der sie im Wesentlichen dem ersten Teil 11 der Drehaufnahme zugewandt ist.

Wie Fig. 9 zeigt, liegt die erste Seitenwand 2 des ersten Gehäuseteils der zweiten Seitenwand 18 des zweiten Gehäuseteils in Verlängerung gegenüber, auf der anderen Seite liegt die zweite Gehäusewand 3 des ersten Gehäuseteils der ersten Gehäusewand 17 des zweiten Gehäuseteils gegenüber. Werden nun die beiden plattenförmigen Element 40, 41 wie in Richtung der beiden Pfeile P dargestellt zueinander geschoben, so werden auch die beiden Gehäuseteile 1 und 16 ineinander geschoben. Hierbei greift der über die Stufe 10 zurückversetzte Rand 9 der ersten Seitenwand 2 unter den Rand 22 der zweiten Seitenwand 18, während an der gegenüberliegenden Seite der über die Stufe 25 zurückversetzte Rand 24 der ersten Seitenwand 17 unter den Rand 7 der zweiten Seitenwand 3 greift. Es kommt also zu einem Überlappen der Ränder 8 und 22 respektive 7 und 24, wie in der Darstellung in Fig. 10 gezeigt ist. Das Drehelement 30 befindet sich nach wie vor in der gezeigten Lösestellung, in der ersichtlich die zylindrische Außenwand 31 des Drehelements 30 nicht oder nur unwesentlich an der Lager- oder Führungsfläche 12 angreift, die Fläche 34 liegt im Wesentlichen der Lager- oder Führungsfläche 12 gegenüber. Ersichtlich bilden die beiden Lager- oder Führungsflächen 12 und 27 in ihrer Ergänzung die Drehaufnahme 42 für das Drehelement 30. Die beiden zusammengesetzten Gehäuseteile 1 und 16 bilden ein an allen vier Seiten geschlossenes Gehäuse 43, wie in Fig. 10 gezeigt.

Soll nun die Klemmfixierung erfolgen, so wird über die spätestens nun durch das Drehelement 30 zu führende Stange 37 das Drehelement 30 um einen über den Zapfen 29 und die Länge der Nut 32 definierten maximalen Verdrehwinkel in die Klemmstellung gedreht. Hierbei wird die zylindrische Außenfläche 31 des Drehelements 30, das bereits an der Lager- oder Führungsfläche 27 anliegt, zusätzlich in Klemmanlage an die Lager- oder Führungsfläche 12 gedreht, wie in Fig. 11 gezeigt. Infolge der gegebenen Durchmesser des Zylinderabschnitts des Drehelements 30 sowie der zylindrischen, hülsenförmigen Drehaufnahme 42 kommt es nun dazu, dass die beiden Gehäuseteile 1 und 16 wie durch den in Fig. 11 gezeigten Doppelpfeil angedeutet ist auseinandergedrückt werden, und zwar in einer Richtung senkrecht zu den Seitenwänden. Dies führt dazu, dass die einander übergreifenden Ränder 8 und 22 bzw. 7 und 24 fest und flächig aufeinandergepresst werden. Da der Rand 22 den Rand 8 außenseitig übergreift, während der am gleichen Gehäuseteil befindliche Rand 24 den Rand 7 innenseitig übergreift, kommt es zu einem festen, flächigen Verpressen oder Verklemmen der beiden Gehäuseteile 1 und 16 miteinander und daraus resultierend zu einer sehr festen Klemm- oder Pressfixierung der beiden Elemente 40 und 41 aneinander.

Zum Lösen ist es lediglich erforderlich, das Drehelement 30 ausgehend von der in Fig. 11 gezeigten Klemmstellung wieder die in Fig. 10 gezeigte Lösestellung zu verdrehen. Die Klemm- oder Flächenpressung zwischen den jeweiligen Rändern wird hierdurch wieder gelöst oder gelockert, so dass die Elemente 40 und 41 wieder auseinandergezogen werden können. Ersichtlich kann das Klemmen und Lösen beliebig oft wiederholt werden, eine Beeinträchtigung der Funktionsweise der erfindungsgemäßen Verbindungsvorrichtung 39 ist hierdurch (anders als beispielsweise bei mehrmaligem Lösen einer Schraubenverbindung in ein ein üblicherweise aus einem Holzmaterial gefertigten Element 40 oder 41) in keinem Fall zu besorgen.

Fig. 12 zeigt schließlich eine Schnittansicht durch die Verbindungsvorrichtung 39, aus der ersichtlich ist, dass die beiden Ränder 35 die Stirnkanten der jeweiligen teile 11 und 26 der Drehaufnahme 42 übergreifen, wodurch ein Herausrutschen des Drehelements 30 aus der Drehaufnahme 42 ausgeschlossen ist.

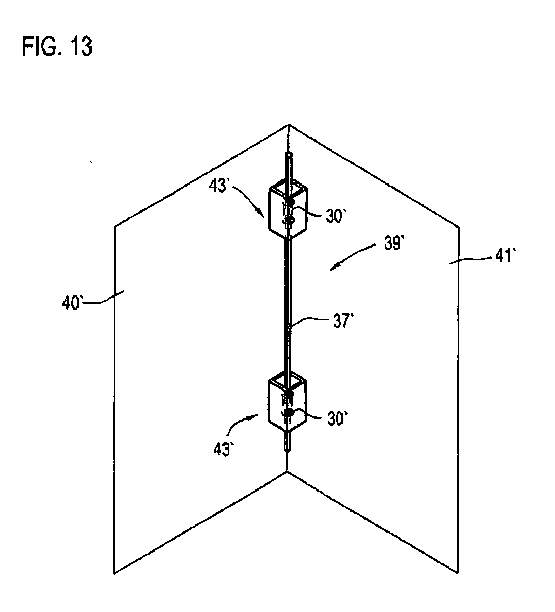

Schließlich zeigt Fig. 13 eine weitere erfindungsgemäße Verbindungsvorrichtung 39', die in ihrer Funktion identisch der zuvor beschriebenen Vorrichtung entspricht. Die in Fig. 13 gezeigte Verbindungsvorrichtung 39' umfasst jedoch zwei jeweils aus zwei Gehäuseteilen 1 und 16 gebildete Gehäuse 43' mit jeweils einem darin befindlichen Drehelement 30', das hier nur gestrichelt angedeutet ist. Beide Drehelemente 30' sind jedoch über eine gemeinsame Stange 37' miteinander gekoppelt. D. h., dass bei Drehung der Stange 37' beide Drehelemente 30' simultan betätigt werden, mithin also beide Gehäuse 34' simultan geklemmt werden und folglich die beiden plattenförmigen Elemente 40', 41' durch eine einzige Betätigung miteinander verbunden werden. Selbstverständlich wäre es möglich, über die Länge der Elemente 40', 41' auch mehr als zwei solcher Gehäuse 43' und eine gemeinsame Stange 37' vorzusehen. Nachdem die Gehäuseteile, die jeweils ein Gehäuse bilden, an ihren oberen und unteren Enden offen sind, ist es ohne Weiteres möglich, dass die Stange 37' beliebig viele Gehäuse 43' durchsetzt.

## Patentansprüche

1. Verbindungsvorrichtung zum Verbinden zweier unter einem Winkel < 180° zueinander stehender plattenförmiger Elemente, umfassend ein erstes Gehäuseteil (1), das am ersten Element (40, 40') festzulegen ist, ein zweites Gehäuseteil (16), das am zweiten Element (41, 41') festzulegen ist, wobei beide Gehäuseteile (1, 16) in der Montagestellung mit ihren benachbarten Rändern (7, 9, 22, 24) einander überlappend zu einem Gehäuse (43, 43') zusammengesetzt sind, sowie ein zwischen den Gehäuseteilen (1, 16) drehbar aufgenommenes Drehelement (30, 30'), das zur Verbindung beider Gehäuseteile (1, 16) in eine Klemmstellung drehbar ist, in der es an den Gehäuseteilen (1, 16) derart angreift, dass diese im Bereich ihrer überlappenden Ränder (7, 9, 22, 24) miteinander verklemmt sind.

2. Verbindungseinrichtung nach Anspruch 1, **dadurch gekennzeichnet, dass** sich die beiden Gehäuseteile (1, 16) in der Montagestellung zu einem rechteckige Gehäuse (43, 43') ergänzen.

3. Verbindungsvorrichtung nach Anspruch 1 oder 2, **dadurch gekennzeichnet, dass** die Gehäuseteile (1, 16) jeweils eine erste und eine zweite Seitenwand (2, 3, 17, 18), die zueinander parallel verlaufen aufweisen, wobei in der Montagestellung die erste Seitenwand (2) des ersten Gehäuseteils (1) die benachbarte Seitenwand (18) des zweiten Gehäuseteils (16) außenseitig übergreift, während die zweite Seitenwand (9) des ersten Gehäuseteils (1) die benachbarte Seitenwand (17) des zweiten Gehäuseteils (16) innenseitig übergreift.

4. Verbindungsvorrichtung nach einem der vorangehenden Ansprüche, **dadurch gekennzeichnet, dass** die Kanten der einander benachbarten Ränder (7, 9, 22, 24) angeschrägt sind.

5. Verbindungsvorrichtung nach einem der vorangehenden Ansprüche, **dadurch gekennzeichnet, dass** an jedem Gehäuseteil (1, 16) ein Teil (11, 26) einer Drehaufnahme (42) für das Drehelement (30) angeordnet sind, welche Teile (11, 26) sich in der Montagestellung zu einer im Wesendichen geschlossenen Drehaufnahme (42) ergänzen.

6. Verbindungsvorrichtung nach einem der vorangehenden Ansprüche, **dadurch gekennzeichnet, dass** das Drehelement (30) ein Zylinderabschnitt ist.

7. Verbindungsvorrichtung nach Anspruch 6, **dadurch gekennzeichnet, dass** am Zylinderabschnitt an einer oder an beiden Enden ein radial überstehender Anschlagring (35) vorgesehen ist.

8. Verbindungsvorrichtung nach Anspruch 6 oder 7, **dadurch gekennzeichnet, dass** im Bereich der Zylinderaußenfläche (31) eine Nut (32) vorgesehen ist, in die in der Montagestellung ein an einem Teil (26) der Drehaufnahme vorgesehener Vorsprung (29) eingreift.

9. Verbindungsvorrichtung nach einem der vorangehenden Ansprüche, **dadurch gekennzeichnet, dass** ein Werkzeugangriffabschnitt (38) zum Bewegen des Drehelements (30) vorgesehen ist.

10. Verbindungsvorrichtung nach Anspruch 9, **dadurch gekennzeichnet, dass** der Werkzeugangriffabschnitt (38) am Drehelement (30) selbst oder an einer mit dem Drehelement (30) verbundenen Stange (37) vorgesehen ist.

11. Verbindungsvorrichtung nach einem der vorangehenden Ansprüche, das wenigstens ein eine Keilform aufweisendes Unterlegteil vorgesehen ist, das zwischen ein plattenförmiges Element (40, 40', 41, 41') und die Gehäusehälften (1, 16) zu setzen ist.

12. Verbindungsvorrichtung nach einem der vorangehenden Ansprüche, **dadurch gekennzeichnet, dass** wenigstens zwei mittels zweier Gehäusehälften (1, 16) gebildeter Gehäuse (43') samt Drehelementen (30') vorgesehen sind, wobei die Drehelemente (30') über ein Bewegungselement, insbesondere eine Stange (37'), zur simultanen Bewegung verbunden sind.

13. Verbindungsvorrichtung nach einem der vorangehenden Ansprüche, **dadurch gekennzeichnet, dass** die Gehäusehälften (1, 16) und/oder das Drehelement (30, 30') aus Kunststoff, insbesondere Polyphenylensulfid (PPS), oder Metall, insbesondere Aluminium oder Edelstahl ist.

## Claims

1. A connecting device for connecting two panel-shaped elements disposed relative to one another at an angle less than 180°, comprising a first housing part (1), which is to be attached to the first element (40, 40'), a second housing part (16), which is to be attached to the second element (41, 41'), wherein both housing parts (1, 16) are connected in the assembly position with their adjacent edges (7, 9, 22, 24) overlapping one another to form a housing (43, 43'), and a rotatable element (30, 30') mounted in a rotatable manner between the housing parts (1, 16), which can be rotated into a clamping position for the connection of the two housing parts (1, 16), in which it engages with the housing parts (1, 16) in such a manner that the latter are clamped to one another in the region of their overlapping edges (7, 9, 22, 24).

2. The connecting device according to claim 1,
**characterised in that**
the two housing parts (1, 16) are connected in the assembly position to form a rectangular housing (43, 43').

3. The connecting device according to claim 1 or 2,
**characterised in that**
the housing parts (1, 16) each provide a first and a second lateral wall (2, 3, 17, 18), which extend parallel to one another, wherein, in the assembly position, the first lateral wall (2) of the first housing part (1) engages externally over the adjacent lateral wall (18) of the second housing part (16), while the second lateral wall (9) of the first housing part (1) engages internally over the adjacent lateral wall (17) of the second housing part (16).

4. The connecting device according to any one of the preceding claims,
**characterised in that**
the edge-surfaces of the mutually adjacent edges (7, 9, 22, 24) are chamfered.

5. The connecting device according to any one of the preceding claims,
**characterised in that**
a part (11, 26) of a rotatable-element retainer (42) for the rotatable element (30) is arranged on each housing part (1, 16), which parts (11, 26) are connected in the assembled position to form a substantially enclosed rotatable-element retainer (42).

6. The connecting device according to any one of the preceding claims,
**characterised in that**
the rotatable element (30) is a cylindrical portion.

7. The connecting device according to claim 6,
**characterised in that**
a radially projecting stopping ring (35) is provided on the cylindrical portion at one or both ends.

8. The connecting device according to claim 6 or 7,
**characterised in that**,
in the region of the external cylinder surface (31), a groove (32) is formed, into which a projection (29) provided on a part (26) of the rotatable-element retainer engages in the assembled position.

9. The connecting device according to any one of the preceding claims,
**characterised in that**
a tool-handle portion (38) is provided for the displacement of the rotatable element (30).

10. The connecting device according to claim 9,
**characterised in that**
the tool-handle portion (38) is provided on the rotatable element (30) itself or on a rod (37) connected to the rotatable element (30).

11. The connecting device according to any one of the preceding claims,
[?]
that at least one underlay part is provided, which comprises a wedge shape, which should be positioned between a panel-shaped element (40, 40', 41, 41') and the housing half (1, 16).

12. The connecting device according to any one of the preceding claims,
**characterised in that**
at least two housings (43') formed by means of two housing halves (1, 16) including rotatable elements (30') are provided, wherein the rotatable elements (30') are connected via a displacement element, especially a rod (37'), for simultaneous displacement.

13. The connecting device according to any one of the preceding claims,
**characterised in that**
the housing halves (1, 16) and/or the rotatable element (30, 30') is made of synthetic material, especially polyphenyl sulphide (PPS), or metal, especially aluminium or stainless steel.

## Revendications

1. Dispositif de liaison destiné à relier deux éléments en forme de plaques situés dans un angle < 180° l'un par rapport à l'autre, comprenant une première partie de logement (1) qui doit être fixée sur le premier élément (40, 40'), une deuxième partie de logement (16) qui doit être fixée sur le deuxième élément (41, 41'), les deux parties de logement (1, 16) étant assemblées dans la position de montage avec leurs bords adjacents (7, 9, 22, 24) se chevauchant l'un l'autre de façon à former un logement (43, 43'), ainsi qu'un élément rotatif (30, 30') reçu de façon à pouvoir tourner entre les parties de logement (1, 16) qui peut tourner afin de relier les deux parties de logement (1, 16) dans une position de serrage, dans laquelle il agit sur les parties de logement (1, 16) de telle sorte que celles-ci sont serrées l'une avec l'autre dans la zone de leurs bords en chevauchement (7, 9, 22, 24).

2. Dispositif de liaison selon la revendication 1, **caractérisé en ce que** les deux parties de logement (1, 16) se complètent dans la position de montage de façon à former un logement rectangulaire (43, 43').

3. Dispositif de liaison selon l'une quelconque des revendications 1 ou 2, **caractérisé en ce que** les parties de logement (1, 16) présentent chacune une première et une deuxième paroi latérale (2, 3, 17, 18) qui s'étendent parallèlement l'une à l'autre, étant entendu que dans la position de montage, la première paroi latérale (2) de la première partie de logement (1) dépasse du côté extérieur sur la paroi latérale adjacente (18) de la deuxième partie de logement (16), tandis que la deuxième paroi latérale (9) de la première partie de logement (1) dépasse du côté intérieur sur la paroi latérale adjacente (17) de la deuxième partie de logement (16).

4. Dispositif de liaison selon l'une quelconque des revendications précédentes, **caractérisé en ce que** les arêtes des bords (7, 9, 22, 24) adjacents l'un à l'autre sont biseautées.

5. Dispositif de liaison selon l'une quelconque des revendications précédentes, **caractérisé en ce qu'**une pièce (11, 26) d'une fixation rotative (42) est agencée sur chaque partie de logement (1, 16) pour l'élément rotatif (30), lesquelles pièces (11, 26) se complètent dans la position de montage de façon à former une fixation rotative (42) essentiellement fermée.

6. Dispositif de liaison selon l'une quelconque des revendications précédentes, **caractérisé en ce que** l'élément rotatif (30) est une section de cylindre.

7. Dispositif de liaison selon la revendication 6, **caractérisé en ce qu'**un anneau de butée (35) dépassant dans le sens radial est prévu sur une ou sur les deux extrémités de la section de cylindre.

8. Dispositif de liaison selon l'une quelconque des revendications 6 ou 7, **caractérisé en ce qu'**une encoche (32) est prévue dans la zone de la surface extérieure du cylindre (31), dans laquelle une saillie (29) prévue sur une pièce (26) de la fixation rotative s'engage dans la position de montage.

9. Dispositif de liaison selon l'une quelconque des revendications précédentes, **caractérisé en ce qu'**une section de prise d'outil (38) est prévue afin de mettre l'élément rotatif (30) en mouvement.

10. Dispositif de liaison selon la revendication 9, **caractérisé en ce que** la section de prise d'outil (38) est prévue sur l'élément rotatif (30) lui-même ou sur une tige (37) reliée à l'élément rotatif (30).

11. Dispositif de liaison selon l'une quelconque des revendications précédentes, **caractérisé en ce qu'**il est prévu au moins une pièce de calage présentant une forme de clavette qui doit être placée entre un élément en forme de plaque (40, 40', 41, 41') et la moitié de logement (1, 16).

12. Dispositif de liaison selon l'une quelconque des revendications précédentes, **caractérisé en ce qu'**il est prévu au moins deux logements (43') réalisés au moyen de deux moitiés de logement (1, 16), avec les éléments rotatifs (30'), les éléments rotatifs (30') étant reliés au moyen d'un élément de mouvement, en particulier une tige (37'), afin d'être mis en mouvement simultanément.

13. Dispositif de liaison selon l'une quelconque des revendications précédentes, **caractérisé en ce que** les moitiés de logement (1, 16) et/ou l'élément rotatif (30, 30') sont réalisés en matériau plastique, en particulier le polyphénylène sulfide, ou en métal, en particulier l'aluminium ou l'acier inoxydable.
